# EUROPÄISCHE PATENTSCHRIFT

(11) **EP 1 518 761 B1**
(45) Veröffentlichungstag und Bekanntmachung des Hinweises auf die Patenterteilung: **02.08.2006**
(21) Anmeldenummer: 03020933.2
(22) Anmeldetag: 16.09.2003
(51) Int. Cl.: B60R 21/16, B32B 27/34, B32B 27/12

(54) **Verbundschichtmaterial insbesondere für einen Airbag, und Verfahren zu dessen Herstellung, Airbag, Passivrückhaltesysteme mit Airbag, sowie gasdichter Polyamidpolymerfilm**
Multilayer air bag material, method of making, air bag, passive passenger restraint system comprising air bag and gastight polyamid film
Matériau multicouche pour sacs gonflables, méthode de fabrication, système de retenue passive comprenant un sac gonflable et film polyamide étanche aux gaz

(43) Veröffentlichungstag der Anmeldung: 30.03.2005
(73) Patentinhaber: Collano Xiro AG, 3185 Schmitten FR (CH)
(72) Erfinder: Schulthess, Adrian, Dr., 1734 Tentlingen (CH)
(74) Vertreter: Hepp, Dieter

(56) Entgegenhaltungen:
- EP-A- 0 577 493
- EP-A- 1 044 803
- WO-A-02/094610
- FR-A- 2 740 384
- US-A- 4 937 134
- US-A1- 2002 098 755

## Beschreibung

Die Erfindung betrifft ein Verbundschichtmaterial, insbesondere für einen Airbag, einen mit einem solchen Verbundschichtmaterial hergestellten Airbag, ein Passivrückhaltesystem mit einem solchen Airbag, ein Verfahren zur Herstellung des Airbag-Verbundschichtmaterials sowie einen gasdichten Polyamidpolymerfilm.

Airbags werden standardmässig in Fahrzeuge eingebaut, um die Fahrzeuginsassen bei Kollisionen vor Verletzungen zu schützen. Airbags besitzen üblicherweise eine Mehrschicht-Struktur. Eine Trägerschicht, z.B. ein Gewebe, Gewirke oder andere Flächengebilde ist mit Kunststoffschichten versehen. Das Gewebe oder Gewirke gewährleistet die gewünschte Festigkeit und die Kunststoffschicht hält das Gas im Airbag.

Ein solches Verbundschichtmaterial für Front-Airbags wird beispielsweise in EP 0 966 352 B1 beschrieben. Ein Polyamidpolymerfilm weist Schichten aus Filmen mit einem Schmelzpunkt von weniger als 220°C auf, wobei das Polyamid des Polymerfilms bestimmte Anforderungen hinsichtlich des Polymergrundgerüstes, insbesondere der Alkylverzweigung erfüllen muss. Der Polyamidpolymerfilm ist an ein Gewebe aus Polyamid oder Polyester gebunden.

Im Gegensatz zu Front-Airbags werden an Seiten-Airbags veränderte Anforderungen gestellt. Da im Fall einer seitlichen Kollision die Gefahr eines Aufprall des Insassen auf die Verkleidung des Innenraums über einen längeren Zeitraum besteht, muss der Airbag für eine Zeitspanne von 20 bis 40 Sekunden voll entfaltet, d.h. wirksam sein.

Noch andere Anforderungen werden z.B. an Airbags für Motorradfahrer gestellt, die z.B. in eine Jacke integriert werden. Auch sogenannte Lawinenairbags, die in einen Rucksack integriert werden können, haben andere Anforderungen. Der Airbag soll aufgeblasen bleiben, um ein Absinken des Lawinenopfers unter die Schneedecke verhindern. Je nach Anwendungsfall muss das Verbundschichtmaterial also definierte Festigkeit einerseits und vorbestimmbare Reduktion des Luftwiderstandes andererseits ermöglichen.
Dies ist mit den bekannten Airbags nicht zufriedenstellend möglich. Um die erforderliche Dichtigkeit zu erzielen, sind deutlich dickere Schichten aus den bislang verwendeten Materialien notwendig. Dies bringt Nachteile, wie erhöhte Herstellungskosten sowie mangelhafte Gebrauchseigenschaften mit sich. Zudem ergeben sich Probleme bei der späteren Entsorgung des Verbundschichtmaterials, da meist unterschiedliche Materialien eingesetzt werden.

Es ist daher die Aufgabe der Erfindung, die Nachteile des Bekannten zu vermeiden und insbesondere ein Verbundschichtmaterial besonders für Airbags und vergleichbare Anwendungen bereitzustellen, das definierbare Reissfestigkeit, weitestgehende Gasdichtigkeit und gegebenenfalls definierten Reisspunkt zum Ablassen des gases aufweist. Weiter ist es eine Aufgabe der Erfindung, einen Polymerfilm, vorzugsweise auf Basis von Polyamiden bereitzustellen, der weitgehend gasdicht ist.

Erfindungsgemäss wird die Aufgabe durch ein Airbag-Verbundschichtmaterial, ein Herstellungsverfahren für das Airbag-Verbundschichtmaterial, einen Airbag, ein passives Rückhaltesystem, sowie einen Polyamidpolymerfilm gemäss den Merkmalen der unabhängigen Ansprüche gelöst.

Das erfindungsgemässe Verbundschichtmaterial, insbesondere für einen Airbag, umfasst einen an ein Trägermaterial gebundenen Polymerfilm, vorzugsweise einen Polyamidpolymerfilm, wobei der Polymerfilm mindestens eine erste und eine zweite Schicht aufweist. Das Verbundschichtmaterial wird dadurch gekennzeichnet, dass die erste Schicht aus einem Material mit einer Glasübergangstemperatur von weniger als -10°C und die zweite Schicht aus einem Material mit einer Glasübergangstemperatur von weniger als 20°C gebildet wird. Vorzugsweise zeichnet sich das Material der ersten Schicht durch eine Glasübergangstemperatur von weniger als -20°C und das Material der zweiten Schicht durch eine Glasübergangstemperatur von weniger als 10°C aus. Besonders bevorzugt besitzt das Material der ersten Schicht ein Glasübergangstemperatur von weniger als -30°C und das Material der zweiten Schicht eine Glasübergangstemperatur von weniger als 0°C.

Das Material der ersten Schicht, die auch die Klebeschicht des Polymerfilms darstellt, soll eine möglichst tiefe Glasübergangstemperatur T_{g} aufweisen, da die Schicht möglichst weich und flexibel sein muss; insbesondere muss sie noch bei -30°C ausreichend flexibel sein. Durch diese Flexibilität wird sichergestellt, dass die Klebeschicht auch bei niedrigen Temperaturen eine ausreichende Verbindung des Polymerfilms mit dem Gewebe gewährleisten kann. Die Klebeschicht weist auch einen niederigeren Schmelzbereich als das Material der zweiten Schicht auf, welche als Deckschicht des Polymerfilms dient. Dieses Material muss eine Reihe von Anforderungen erfüllen: Das Material muss eine hohe Schmelztemperatur aufweisen; ein Verkleben der Deckschicht mit einer anderen, darauf liegenden Deckschicht muss auch bei einer Lagerung bei einer Temperatur von über 125°C weitestgehend ausgeschlossen sei. Sodann ist eine ausreichende Flexibilität des Materials der Deckschicht auch bei einer Temperatur von -30°C notwendig. (Die Temperatur von -30°C stellt eine Standardtemperatur für die Prüfung der Standfestigkeit eines Airbagmaterials bei niedrigen Temperaturen dar). Bei einer solchen tiefen Temperatur muss die Deckschicht intakt bleiben, um die Dichtheit des Polymerfilms beim Entfalten des Airbags aufrechterhalten zu können.

Bevorzugt besteht die Klebeschicht aus niedrig schmelzenden, weichen Polymeren mit einem Tg von, speziell bevorzugt, kleiner minus 20°C und vermag eine gute Verbindung zum verwendeten Polyamidgewebe einzugehen. Materialien können bevorzugt auch sein Polyurethane mit einem Schmelzbereich von 100-160°C und einer Shore A Härte kleiner 95. (entsprechende Produkte stellen zB. die Firmen Huntsman, Huntsman Polyurethanes,2190 Executive Hills Boulevard, Auburn Hills, MI 48326, USA; Bayer Polymers, D-51368 Leverkusen, Deutschland oder Merquinsa, Gran Vial 17, 08160 Montmeló, Barcelona, Spanien her.)

Das oben erwähnte Verkleben der Deckschicht darf beim zusammengefalteten, eingebauten Airbag nicht auftreten. Auch bei der erfindungsgemäss vorgesehenen Anwendung für Segel (Segelboote, Surfer usw.) darf es kein Verkleben im zusammengepressten Zustand geben.
Bevorzugt umfasst das Material der zweiten Schicht einen Copolyester, ein Copolyamid oder ein Polyamidelastomer. Das Material weist dabei einen Schmelzpunkt von mehr als 170 °C auf. Derartige Materialien können die gestellten Anforderungen erfüllen, d.h. sie besitzen einen tiefen Gleit-Reibwert, eine gute Kälteschlagzähigkeit, eine gute Scheuerbeständigkeit, sind sehr flexibel und weich.

Weiter bevorzugt sind Copolyester-, Copolyamid- oder Polyamidelastomer-Materialien, die eine Kombination von Polymerblöcken aus Polyamid-6, Polyamid-6,6, Polyamid-11, Polyamid-12 oder Mischungen davon mit Polymerblöcken aus Polyethylenglykol, Polypropylenglykol, Poly-Tetrahydrofuran oder Mischungen davon aufweisen. Als besonders vorteilhaft haben sich Polyamidelastomere mit einer Kombinationen von Polymerblöcken aus Polyamid-6,6 mit Polyethylenglykol oder Polypropylenglykol oder mit einer Kombination von Polymerblöcken aus Polyamid-12 mit Poly-Tetrahydrofuran herausgestellt. Derartige Polyamidelastomere werden unter anderen von der Fa. Degussa (Vestamid E-Serie) oder der Fa. Atofina (PEBAX-Serie) vertrieben.

Ein wesentlicher Vorteil der Verwendung dieser polymeren Materialien mit Polyamid-Blöcken für das Verbundschichtmaterial beruht auf einer einfacheren Entsorgung, da im wesentlichen identische oder zumindest ähnliche Stoffklassen für den Aufbau dieses Schichtmaterials eingesetzt werden. Die vorstehend beschriebenen Materialien können (alleine oder in Kombination oder Mischung mit anderen Kunststoffen) verwendet werden.

Es sind auch zusätzliche Schichten im Verbundaufbau denkbar.

Der Copolyester, das Copolyamid oder das Polyamidelastomer können gegebenenfalls Additive wie Antioxidantien, Gleitmittel (z.B. Fettsäureamide) oder Antiblockmittel (z.B. Silica) enthalten, die die Eigenschaften dieser Materialien, wie beispielsweise Stabilität oder Verarbeitbarkeit verbessern.

In einer weiteren, vorteilhaften Ausführungsform des Airbag-Verbundschichtmaterials enthält das Material der ersten und/oder der zweiten Schicht mindestens ein Flammschutzmittel. Diese Flammschutzmittel können auf halogenhaltigen oder halogenfreien Komponenten basieren. Die halogenhaltigen Flammbatches enthalten z.B. Deca-brom-cyclohexan, Octa-brom-diphenylether etc. usw. oder Antimontrioxid (Sb₂O₅) in einem Trägerpolymer, welches meist LDPE ist. Es können auch halogenlose Flammschutzmittel eingesetzt werden, z.B. Phosphatester, Aluminiumoxid-trihydrat, Magnesiumoxid-dihydrat, roter Phosphor, Zinkborat, Ammoniumpolyphosphat, Melamincyanurat, Zinkstannat oder Zinkhydroxidstannat.

Der Zusatz eines Flammschutzmittels erhöht die Stabilität des Polymerfilms des Airbag-Verbundschichtmaterials gegenüber der thermischen Belastung durch die heissen Verbrennungsgase, die bei der Auslösung des Airbags freigesetzt werden. Ein Durchschmelzen bzw. ein Entflammen des Polymerfilms und damit eine Fehlfunktion des Airbags wird damit vermieden.

Vorstellbar ist auch eine Einfärbung zumindest einer der Schichten des Polymerfilms. Dies erlaubt eine einfache Unterscheidung zwischen der Klebeschicht und der Deckschicht.

Vorteilhaft weist das Verbundschichtmaterial, insbesondere für einen Airbag, eine Trägerschicht auf, die aus Polyamid- oder Polyesterfilamenten oder -garn hergestellt, z.B. gewebt sein kann. Die Trägerschicht kann auch vliesartig oder gestrickt oder gewirkt oder als Netz (Gitter) ausgebildet sein. Trägermaterial und Filmschicht müssen verbunden sein. Dies lässt sich vor allem durch Verkleben oder einen Laminiervorgang erreichen. Dabei kann z.B. eine der Schichten oder das Trägermaterial auf Erweichungstemperatur mit der oder den anderen Schichten durch Pressen oder auf einer Laminieranlage verbunden werden. Das Verbinden oder Laminieren von Trägermaterial und Filmschicht kann sequentiell oder in einem Arbeitsgang erfolgen. Wesentlich ist, dass das Verbundschichtmaterial eine Schicht zur Verstärkung und Einstellung der Festigkeit des Airbags und zur Gewährleistung der Gasdichtigkeit aufweist. Selbstverständlich trägt auch die Trägerschicht etwas zur Festigkeit bei und die Trägerschicht kann die Gasdichtigkeit beeinflussen. Die Trägerschicht kann auch vorbehandelt oder vorbeschichtet sein.

Ein weiterer Aspekt der Erfindung ist ein Verfahren zur Herstellung des erfindungsgemässen Verbundschichtmaterials. Das Verfahren weist die Schritte des Bereitstellens eines Polymerfilms, welcher mindestens zwei Schichten umfasst, und des Auflaminieren des Polymerfilms mit einer Trägerschicht, vorzugsweise einem Gewebe oder Gewirke, vorzugsweise einem Polyamidgebilde auf. Der Polymerfilm bzw. die Materialien der ersten und der zweiten Schicht besitzen identischen Eigenschaften wie bereits vorangehend für das Verbundschichtmaterial ausgeführt wurde.

Der Polymerfilm beziehungsweise dessen erste und zweite Schicht können durch Extrusion hergestellt werden. Ein geeignetes Extrusionsverfahren ist eine Blasextrusion, wobei andere Extrusionsarten, welche für die Herstellung von Folien eingesetzt werden, vor allem Coextrusion auch sehr gut geeignet sind. Wichtig bei diesen Extrusionarten ist jedoch, dass sich Folien oder Filme in den gewünschten Dicken herstellen lassen. Das bevorzugte Extrusionsverfahren ist eine Blas-Coextrusion oder eine Flachfolien-Coextrusion. Derartige Extrusionsverfahren sind dem Fachmann bekannt.

Werden in einer Ausführungsform des Verfahrens die erste und zweite Schicht durch getrennte Extrusion hergestellt, so erfolgt in einem weiteren Schritt das Laminieren dieser Schichten zu einem Polymerfilm. Durch diesen zusätzlichen Schritt ist es möglich, auch Polymerfilme; die aus verschiedenen Materialien bestehen, für die Herstellung des Airbag- Verbundschichtmaterials einzusetzen.

Ebenfalls ein Aspekt der Erfindung ist ein Airbag, welcher aus einem erfindungsgemässen Verbundschichtmaterial hergestellt ist. Für einen solchen Airbag werden entsprechende Zuschnitte aus dem Verbundschichtmaterial hergestellt und diese zum Airbag zusammengefügt.

Ein Aspekt der Erfindung ist auch ein passives Rückhaltesystem, welches mindestens einen erfindungsgemässen Airbag umfasst.

Gegenstand der Erfindung ist auch ein Polyamidpolymerfilm, welcher mindestens zwei Schichten enthält. Charakterisiert wird dieser Polyamidpolymerfilm dadurch, dass die erste Schicht eine Glasübergangstemperatur von weniger als -10°C und die zweite Schicht eine Glasübergangstemperatur von weniger als 20°C aufweist, und dass die zweite Schicht mindestens einen Copolyester, ein Copolyamid oder ein Polyamidelastomer umfasst, wobei das Polyamidelastomer einen Schmelzpunkt von mehr als 170 °C aufweist. Bevorzugt weist das Material der ersten Schicht eine Glasübergangstemperatur von weniger als -20°C, weiter bevorzugt von weniger als -30°C und das Material der zweiten Schicht eine Glasübergangstemperatur von weniger als 10°C, besonders bevorzugt von weniger als 0°C auf.

Der Polyamidpolymerfilm weist vorteilhafterweise identische Eigenschaften und Bestandteile auf, wie sie bereits vorangehend bei der Erläuterung für das Airbag-Verbundschichtmaterial beschrieben wurden.

Der erfindungsgemässe Polyamidpolymerfilm ist weitestgehend gasundurchlässig und kann deshalb bevorzugt als gasdichte Beschichtung eines Gewebes verwendet werden. Die Verwendung zur Herstellung von Airbags oder auch Segeln bietet eine Vielzahl von überraschenden Vorteilen und gewährleistet grosse konstruktive Flexibilität.

Die Erfindung wird im folgenden anhand von Beispielen näher ausgeführt.

### Beispiele 1 bis 3

Durch Blasextrusion werden Filme aus Vestamid E40 S3 (Beispiel 1), Vestamid E62 S3 (Bsp. 2) und Vestamid EX 9200 (Bsp. 3) (Hersteller Fa. Degussa) mit Flächengewichten von 20, 35 und 45g/m² hergestellt. Aus den gleichen Rohstoffen wurden auch flammgehemmte Filme durch Zugabe von 0% (1-0, 2-0, 3-0) 5% (1-5, 2-5, 3-5), 10% (1-10, 2-10, 3-10) oder 20% (1-20, 2-20, 3-20) eines handelsüblichen, in Polyethylen eingearbeiteten Flammschutzmittels (Luvogard PE 81, Fa. Lehmann & Voss) hergestellt (die Bezeichnungen geben zuerst die Beispielverbindung und als zweites den Anteil an Flammschutzmittel wieder). Der verwendete Blasextruder ist eine Anlage der Firma Collins (Typ 25x30D, ausgerüstet mit einer handelsüblichen 5-Zonenschnecke, welche für die Extrusion der verschiedensten Polymere geeignet ist. Er weist einen entsprechenden Blasfolienababzug (Typ 180/400) auf.

Die Extrusion der Filme erfolgte unter den in Tabelle 1 angegebenen Bedingungen.

**Tabelle 1: Extrusionbedingungen für Beispiele 1-3**

| Rohstoff | Einzug in °C | Heizzone 1-5 ansteigend in °C | Kopftemperatur in °C | Bemerkungen |
|---|---|---|---|---|
| 1-0, 1-5, 1-10 oder 1-20 | 155 | 170-200 | 200 | Alle Filme sind sehr weich, ohne Stippen mit sehr gute mechanischen Eigenschaften |
| 2-0, 2-5, 2-10 oder 2-20 | 155 | 170-200 | 200 | Wie für Bsp. 1 |
| 3-0, 3-5, 3-10 oder 3-20 | 170 | 190-230 | 230 | Wie für Bsp. 1 |

Die einzelnen Filme wurden zu 2-Schichtfilmen in einer Meyer-Doppelbandflachkaschieranlage (Typ KFK-S 400 700) zusammenlaminiert.
Flachbandkaschieranlage: 2 Endlosbänder führen das Produkt durch die Anlage. Ein Band umläuft den oberen Teiil der Kaschieranlage und das andere Band den unteren Teil. Beide Bänder werden durch denselben Motor angetrieben, so dass die Bänder immer synchron laufen.
Die Geschwindigkeit der Bänder kann stufenlos eingestellt werden. Der Abstand zwischen dem oberen und unteren Teil der Anlage (Höhe) kann verändert werden um eine Anpassung an die Produktdicke zu gewährleisten. Nach dem Aufheizen erfordern viele Produkte einen Pressdruck. Zwei Presswalzen drücken mit einer vorgewählten Kraft auf das Produkt. Die Abwärtsbewegung der oberen Presswalze wird durch einen verstellbaren Anschlag begrenzt. Diesen Anschlag nennt man Niveau. Die Presswalze drückt also mit der vorgewählten Kraft in das Produkt ein, aber nicht weiter als es der Niveauanschlag erlaubt. Nach dem Durchführen durch die Presswalzen wird das Laminat durch die Bänder durch den Kühlungsbereich geführt und kann am Ende der Anlage aufgewickelt werden.
Als Klebeschicht, bzw. tiefschmelzendere Schicht, wurde ein Film von 35 oder 45g/m² Flächengewicht aus Vestamid E40 S3 mit 0% (1-0), 5% (1-5) oder 10% (1-10) des Flammschutzmittel-PE-Gemisches verwendet. Als Deckschicht, bzw. hochschmelzende Schicht, wurde ein Film aus 18g/m² Vestamid E 62S oder 20g/m² Vestamid EX 9200 mit 0% (2-0, 3-0), 10% (2-10, 3-10) oder 20% (2-20, 3-20) des gleichen Flammschutzmittel-PE-Gemisches verwendet.

Die Laminierung der beschriebenen Filme zu den 2-Schichtfilmen erfolgte unter folgenden Bedingungen:

| | |
|---|---|
| Laminierungstemperatur | 170°C |
| Schichtdicke | 0.1 mm |
| Niveau (Höhenverstellung der oberen Presswalze) | 0mm |
| Ausgeübter Druck | 1 N |
| Laminier-Geschwindigkeit | 6 m/min |

In einer anderen Herstellungsweise wurde ein 2-Schichtfilm bestehend aus 20 g/m² Vestamid EX 9200 mit 10% des Flammschutzmittel-PE-Gemisches (3-10) und Vestamid E 40 S3 mit 5% des Flammschutzmittel-PE-Gemisches (1-5) auf einer 3-Schicht-Blasfolien-Coextrusionsanlage, wie sie heute Stand der Technik ist und durch Firmen wie Reifenhäuser, Alpine oder Windmöller-Hölscher hergestellt und vertrieben werden, hergestellt. Die Schichtdikkenverteilung betrug 22.5 g/m² der Komponente 1-5 (Extruder 1), 22.5 g/m² der Komponente 1-5 (Extruder 2), und 20 g/m² der Komponente 3-10 (Extruder 3).

Die so hergestellten 2-Schicht-Filme bzw. der coextrudierte 2-Schicht-Film werden auf der Doppelbandkaschieranlage der Firma Meyer auf ein Polyamid-Gewebe aus hochfesten Garnen (Typ OPW, Berger Safety Textiles) laminiert. Derartige Verbundschichtmaterialien werden wie erwähnt, vorzugsweise als Airbag-Gewebeabdichtungen eingesetzt.

Die Prozessbedingungen für das Laminieren der Schichtfilme auf das Gewebe wären wie folgt:

| | |
|---|---|
| Laminierungstemperatur | 170°C |
| Schichtdicke | 0.1 mm |
| Niveau (Höhenverstellung der oberen Presswalze) | 0.5 mm |
| Ausgeübter Druck | 18 N |
| Laminier-Geschwindigkeit | 1 m/min |

### Beispiele 4 bis 19 und Vergleichsbeispiele 1 bis 2

Die vorangehend beschriebenen 2-Schicht-Film-Airbaggewebe-Verbundschichten wurden hinsichtlich der Lösbarkeit der Deckschicht von einer anderen Deckschicht, welche sich in innigem Kontakt mit der ersteren befindet, getestet. Hierzu wurde die Deckschicht eines Probestücks von 10 x 10 cm Grösse auf die Deckschicht eines anderen Probestückes von ebenfalls 10 x 10 cm Grösse gelegt. Dieser Stapel wurde mit einem Gewicht von 10 kg beschwert und in einem Heissluftofen für 14 Tage bei 125°C belassen. Die verschiedenen Gewebestücke wurden nach diesem Zeitraum aus dem Ofen entfernt und für 1h bei Raumtemperatur gelagert. Nach dem Erkalten wurde das Trenn-Verhalten der Gewebstükke durch Messungen ermittelt. Die Ergebnisse sind in Tabelle 2 dargestellt. Die Angaben zur Klebeschicht bzw. Deckschicht beziehen sich auf die in den Beispielen 1 bis 3 angegebenen Verbindungen einschliesslich den jeweils zugesetzten Mengen an Flammschutzmittel-PE-Gemisch sowie das Flächengewicht der Filme, so bezeichnet 1-0/35 beispielsweise einen Film aus Vestamid E40 S3 ohne Flammschutzmittelzusatz mit einem Flächengewicht von 35 g/m².
Die Vergleichsbeispiele sind repräsentative Beispiele verschiedener Material-Kombinationen von extrudierbaren, thermoplastischen Polyestern, Polyether-Polyurethanen oder Polyester-Polyurethanen. PU1 entspricht dabei thermoplastischen Polyester-polyurethan mit einem Schmelzbereich von 110-130°C und einer Shore A-Härte von 85. Solche Produkte werden z.B. Durch die Firmen Huntsman, Huntsman Polyurethanes,2190 Executive Hills Boulevard,Auburn Hills, MI 48326, USA; Bayer Polymers, D-51368 Leverkusen, Deutschland oder Merquinsa, Gran Vial 17, 08160 Montmeló, Barcelona, Spanien hergestellt und vertrieben.
PU2 ist ein hochschmelzendes Polyester-polyurethan mit einem Schmelzbereich von 160- 170°C und einer Shore A-Härte von 85-90. Solche Produkte werden durch die Firmen Bayer Polymers, D-51368 Leverkusen, Deutschland oder Merquinsa, Gran Vial 17, 08160 Montmeló, Barcelona, Spanien hergestellt und vertrieben. PES ist ein hochschmelzender Polyester mit einem Schmelzbereich von 210-220°C und einer Shore A-Härte von Shore D 57. Solche Produkte werden unter anderen von der Firma DSM, DSM Engineering Plastics, Poststraat 1, N-6130 AA Sittard oder Eastman, Eastman Chemical Company, 100 North Eastman Road, P.O.Box 511, Kingsport, TN 37662-5075 hergestellt und vertrieben

**Tabelle 2: Trennungsversuche der Beispiele 4 bis 19 und der Vergleichsbeispiele 1 und 2.**

| Beispiel | Klebeschicht | Deckschicht | Trennungsverhalten* |
|---|---|---|---|
| 4 | 1-0/35 | 2-5/18 | 1 |
| 5 | 1-0/35 | 2-10/18 | 1 |
| 6 | 1-0/35 | 2-20/18 | 1 |
| 7 | 1-5/45 | 2-5/18 | 1 |
| 8 | 1-5/45 | 2-10/18 | 1 |
| 9 | 1-5/45 | 2-20/18 | 1 |
| 10 | 1-10/45 | 2-5/18 | 1 |
| 11 | 1-10/45 | 2-10/18 | 1 |
| 12 | 1-10/45 | 2-20/18 | 1 |
| 13 | 1-0/35 | 3-0/20 | 1 |
| 14 | 1-0/35 | 3-10/20 | 1 |
| 15 | 1-5/45 | 3-0/20 | 1 |
| 16 | 1-5/45 | 3-10/20 | 1 |
| 17 | 1-10/45 | 3-0/20 | 1 |
| 18 | 1-10/45 | 3-10/20 | 1 |
| 19 | 1-5/45** | 3-10/20** | 1 |
| V1 | PU1/45 | PES/20 | 3 |
| V2 | PU1/45 | PU2/20 | 4 |

| | | | |
|---|---|---|---|
| *: 1 = Beide Lagen sind ohne Kraftaufwand separierbar, 2 = Beide Lagen können leicht getrennt werden, 3 = Beide Lagen können noch getrennt werden, 4 = Beide Lagen können nicht ohne Verletzung der Oberfläche (Ausreissen des Kleber) getrennt werden. | | | |
| **: Coextrudierter Film | | | |

In einer weiteren Versuchsreihe wurde die Haftung der Klebeschicht mit dem Gewebe bzw. der Deckschicht überprüft. Dazu wurden Laminate mit folgender Schichtabfolge hergestellt: PA-Gewebe - Klebeschicht - Deckschicht - Klebeschicht - Deckschicht - Klebeschicht - PA-Gewebe. Diese Laminate hatten eine Grösse von 5 x 20 cm.

Zum Laminieren wurden zwei vorgefertigte Gewebe-2-Schichtfilm-Verbunde mit einer Klebeschicht der Zusammensetzung Vestamid E40 S3 mit 45 % des Flammschutzmittel-PE-Gemisches (1-45) gegeneinander laminiert. Es gelten im Übrigen die gleichen Bedingungen wie zur Herstellung des Gewebe-2-Schichtfilm-Verbundes wie vorgehend beschrieben.

Es wurden je 6 entsprechende Laminate von jeder Kombination hergestellt. Je 2 Laminate werden nach der Herstellung in eine Zugprüfmaschine (Typ 1120.25 der Fa. Zwick, August-Nagel-Strasse 11 D-89079 Ulm, Deutschland) eingespannt und der Schälwiderstand bei Raumtemperaturlagerung gemessen. Ein Schälwiderstand von > 0.6 N/mm wird allgemein als gut beurteilt. Zwei der Laminate wurden für eine Stunde in kochendem Wasser gelagert. Nach dem Trocknen bei Raumtemperatur für 6 Stunden wurde wiederum der Schälwiderstand gemessen. Der Schälwert sollte nicht kleiner als 70% des Ausgangswertes sein. Der Kochtest soll dabei die im Auto auftretenden feucht-heissen Klimabedingungen simulieren. Aus den Messwerten der Tabelle 3 geht hervor, dass mit dem dickeren Klebefilm von 45g/m² tendenziell die besseren Resultate erzielt werden.

Nach DIN 53375 wird ein Gleitreibungskoeffizient bestimmt. Ein möglichst niedriger Koeffizient bedeutet, dass die Oberflächen gut aufeinandergleiten, was vor allem beim Öffnen des Airbags wichtig ist, da es sonst zu Schwierigkeiten wie etwa einer ungleichmässigen Entfaltung kommen kann. Ein Koeffizient von < 0.6 wird als ausreichend beurteilt. Aus dem gleichen Grund wird der vorher beschriebene Lagerungstest der Oberflächen, d.h. der Deckschichten zueinander bei 125°C durchgeführt.

Als weiterer Test wurde ein horizontaler Flammtest analog zur Norm UL 94HB durchgeführt. Ein horizontal eingespannter Streifen wurde mit einem Bunsenbrenner in der Mitte für 20 Sekunden beflammt und entzündet. Es wurde geprüft, ob der Streifen bis zum Ende durchbrennt. Falls er nicht durchbrennt, wird er als in Ordnung eingestuft. Die Polyamidelastomere sind von Natur aus schwer entflammbar. Hingegen brannten die Streifen mit PU- und Polyester-Deckschicht durch. Eine sehr gute Flammwidrigkeit wird durch die Zugabe von 10% eines Flammschutzmittel-PE-Gemisches in der Deckschicht und von 5% des Gemisches in der Klebeschicht erreicht. Die Tabelle 3 fasst die Ergebnisse der beschriebenen Testversuche zusammen.

**Tabelle 3: Eigenschaften der verschiedene Kombinationen von Klebe- und Deckschicht.**

| Beispiel | Schälwiderstand | | Reibwert (Gleit.) Soll 0.25 µ | Selbstverlöschend in % der Brandtests |
|---|---|---|---|---|
| | bei RT- Lagerung (Soll > 1 N/mm) | Nach Kochtest 100°C/1h in N/mm | | |
| 4 | 0.91 | 0.73 | 0.38 | 50 |
| 5 | 0.79 | 0.50 | 0.44 | 25 |
| 6 | 0.92 | 0.59 | 0.41 | 40 |
| 7 | 0.70 | 0.66 | 0.47 | 100 |
| 8 | 0.94 | 0.74 | 0.38 | 84 |
| 9 | 1.02 | 0.96 | 0.46 | 100 |
| 10 | 0.68 | 0.64 | 0.38 | 100 |
| 11 | 0.62 | 0.54 | 0.46 | 100 |
| 12 | 0.68 | 0.52 | 0.40 | 100 |
| 13 | 0.64 | 0.44 | 0.42 | 100 |
| 14 | 0.78 | 0.46 | 0.44 | 100 |
| 15 | 0.75 | 0.7 | | 100 |
| 16 | 0.79 | 0.72 | | 100 |
| 17 | 0.63 | 0.48 | | 100 |
| 18 | 0.73 | 0.57 | | 100 |
| 19 | 0.8 | 0.73 | 0.4 | 100 |
| V1 | | | 0.6 | 0 |
| V2 | | | 0.8 | 0 |

## Patentansprüche

1. Verbundschichtmaterial insbesondere für einen Airbag, umfassend einen Polymerfilm, vorzugsweise einen Polyamidpolymerfilm, der mit einer Trägerschicht, insbesondere einem Gewebe oder Gewirke, verbunden ist, wobei der Polymerfilm mindestens eine erste und eine zweite Schicht aufweist, **dadurch gekennzeichnet, dass** die erste Schicht aus einem Material mit einer Glasübergangstemperatur von weniger als -10°C und die zweite Schicht aus einem Material mit einer Glasübergangstemperatur von weniger als 20°C gebildet wird.

2. Verbundschichtmaterial insbesondere für einen Airbag, nach Anspruch 1, **dadurch gekennzeichnet, dass** das Material der ersten Schicht eine Glasübergangstemperatur von weniger als -20°C, weiter bevorzugt von weniger als -30°C und das Material der zweiten Schicht eine Glasübergangstemperatur von weniger als 10°C, besonders bevorzugt von weniger als 0°C aufweist.

3. Verbundschichtmaterial insbesondere für einen Airbag, nach Anspruch 1 oder 2, **dadurch gekennzeichnet, dass** das Material der zweiten Schicht mindestens einen Copolyester, ein Copolyamid oder ein Polyamidelastomer umfasst, wobei das Material einen Schmelzpunkt aufweist, der bei oder über 170°C. liegt.

4. Verbundschichtmaterial insbesondere für einen Airbag, nach Anspruch 3, **dadurch gekennzeichnet, dass** der Copolyester, das Copolyamid oder das Polyamidelastomer eine Kombination von Polymerblöcken aus Polyamid-6, Polyamid-6,6, Polyamid-11, Polyamid-12 oder Mischungen davon mit Polymerblöcken aus Polyethylenglykol, Polypropylenglykol, Poly-Tetrahydrofuran oder Mischungen davon aufweist.

5. Verbundschichtmaterial insbesondere für einen Airbag, nach einem der vorangehenden Ansprüche, **dadurch gekennzeichnet, dass** das Material der zweiten Schicht ein Polyamidelastomer enthält, das ausgewählt ist aus einer Kombination von Polymerblöcken aus Polyamid-6,6- mit Polyethylenglykol oder Polypropylenglykol oder aus einer Kombination von Polymerblökken aus Polyamid-12 mit Poly-Tetrahydrofuran.

6. Verbundschichtmaterial insbesondere für einen Airbag, nach einem der vorangehenden Ansprüche, **dadurch gekennzeichnet, dass** das Material der ersten und/oder der zweiten Schicht mindestens ein Flammschutzmittel enthält.

7. Verbundschichtmaterial insbesondere für einen Airbag, nach Anspruch 6, **dadurch gekennzeichnet, dass** das Flammschutzmittel ausgewählt ist aus der Gruppe umfassend halogenhaltige Flammschutzmittel, Phosphatester, Aluminiumoxid-Trihydrat, Magnesiumoxid-Dihydrat, roter Phosphor, Zinkborat, Ammoniumpolyphosphat, Melamincyanurat, Zinkstannat und Zinkhydroxidstannat.

8. Verbundschichtmaterial insbesondere für einen Airbag, nach einem der vorangehenden Ansprüche, **dadurch gekennzeichnet, dass** die Trägerschicht Polyamid- oder Polyesterfilamente oder -garn enthält und vorzugsweise gewebt, gestrickt, als Vlies oder als Netz ausgebildet ist.

9. Verfahren zur Herstellung eines Airbag-Verbundschichtmaterials nach einem der Ansprüche 1 bis 8, enthaltend die Schritte:
- Bereitstellen eines Polymerfilms umfassend mindestens zwei Schichten,
- Verbinden, insbesondere Laminieren des Polymerfilms mit einer Trägerschicht, vorzugsweise einem Gewebe, Gewirke oder Netz, wobei die Trägerschicht vorzugsweise Polyamid enthält,
und wobei die erste Schicht des Polymerfilms aus einem Material mit einer Glasübergangstemperatur von weniger als -10°C und die zweite Schicht des Polymerfilms aus einem Material mit einer Glasübergangstemperatur von weniger als 20°C gebildet wird.

10. Verfahren nach Anspruch 9, **dadurch gekennzeichnet, dass** das Material der zweiten Schicht mindestens einen Copolyester, ein Copolyamid oder ein Polyamidelastomer umfasst, wobei das Material einen Schmelzpunkt von mehr als 170 °C aufweist.

11. Verfahren nach Anspruch 10, **dadurch gekennzeichnet, dass** der Copolyester, das Copolyamid oder das Polyamidelastomer eine Kombination von Polymerblöcken aus Polyamid-6, Polyamid-6,6, Polyamid-11, Polyamid-12 oder Mischungen davon mit Polymerblöcken aus Polyethylenglykol, Polypropylenglykol, poly-Tetrahydrofuran oder Mischungen davon, insbesondere eine Kombination von Polymerblöcken aus Polyamid-6,6 mit Polyethylenglykol oder Polypropylenglykol oder einer Kombination von Polymerblöcken aus Polyamid-12 mit poly-Tetrahydrofuran aufweist.

12. Verfahren nach einem der Ansprüche 9 bis 11, **dadurch gekennzeichnet, dass** das Material der ersten und/oder der zweiten Schicht als Additiv ein Flammschutzmittel enthält.

13. Verfahren nach einem der Ansprüche 9 bis 12, **dadurch gekennzeichnet, dass** der Polymerfilm und/oder die Schichten durch Extrusion hergestellt werden.

14. Verfahren nach Anspruch 13, **dadurch gekennzeichnet, dass** die extrudierten Schichten zu einem Polymerfilm zusammen laminiert werden.

15. Airbag, enthaltend ein Verbundschichtmaterial nach einem der Ansprüche 1 bis 8.

16. Passives Rückhaltesystem, umfassend mindestens einen Airbag nach Anspruch 15.

17. Polyamidpolymerfilm enthaltend mindestens zwei Schichten, **dadurch gekennzeichnet, dass** die erste Schicht eine Glasübergangstemperatur von weniger als -10°C und die zweite Schicht eine Glasübergangstemperatur von weniger als 20°C aufweist, und dass die zweite Schicht mindestens einen Copolyester, ein Copolyamid oder ein Polyamidelastomer umfasst, wobei das Material einen Schmelzpunkt von mehr als 170 °C aufweist, **dadurch gekennzeichnet, dass** das Material der ersten und/oder zweiten Schicht mindestens ein Flammschutzmittel enthält, welches ausgewählt ist aus der Gruppe umfassendhalogenhaltige Flammschutzmittel, Phosphatester, Aluminiumoxid-Trihydrat, Magnesiumoxid-Dihydrat, roter Phosphor, Zinkborat, Ammoniumpolyphosphat, Melamincyanurat, Zinkstannat und Zinkhydroxidstannat.

18. Polyamidpolymerfilm nach Anspruch 17, **dadurch gekennzeichnet, dass** das Material der ersten Schicht eine Glasübergangstemperatur von weniger als -20°C, weiter bevorzugt von weniger als -30°C und das Material der zweiten Schicht eine Glasübergangstemperatur von weniger als 10°C, besonders bevorzugt von weniger als 0°C aufweist.

19. Polyamidpolymerfilm nach Anspruch 17 oder 18, **dadurch gekennzeichnet, dass** das Copolyester, das Copolyamid oder das Polyamidelastomer eine Kombination von Polymerblöcken aus Polyamid-6, Polyamid-6,6, Polyamid-11, Polyamid-12 oder Mischungen davon mit Polymerblöcken aus Polyethylenglykol, Po-lypropylenglykol, Poly-Tetrahydrofuran oder Mischungen davon aufweist.

20. Polyamidpolymerfilm nach einem der Ansprüche 17 bis 19, **dadurch gekennzeichnet, dass** das Material einer Schicht, vorzugsweise der zweiten Schicht ein Polyamidelastomer ist, ausgewählt aus einer Kombination von Polymerblöcken aus Polyamid-6,6 mit Polyethylenglykol oder Polypropylenglykol oder einer Kombination von Polymerblöcken aus Polyamid-12 mit Poly-Tetrahydrofuran.

21. Verwendung eines Polyamidpolymerfilms nach Anspruch 17 bis 20 zur gasdichten Beschichtung eines Trägermaterials, insbesondere eines Gewebes, Gewirkes, eines Vlieses oder eines Netzes oder Gitters.

## Claims

1. Laminated material, particularly for an airbag, encompassing a polymer film, preferably a polyamide polymer film, which has been bonded to a backing layer, in particular to a woven or knitted fabric, where the polymer film has at least one first and one second layer, **characterized in that** the first layer is formed from a material whose glass transition temperature is below -10°C, and the second layer is formed from a material whose glass transition temperature is below 20°C.

2. Laminated material particularly for an airbag, according to Claim 1, **characterized in that** the glass transition temperature of the material of the first layer is below -20°C, more preferably below -30°C, and the glass transition temperature of the material of the second layer is below 10°C, particularly preferably below 0°C.

3. Laminated material particularly for an airbag, according to Claim 1 or 2, **characterized in that** the material of the second layer encompasses at least one copolyester, one copolyamide, or one polyamide elastomer, the melting point of the material being equal to or above 170°C.

4. Laminated material particularly for an airbag, according to Claim 3, **characterized in that** the copolyester, the copolyamide, or the polyamide elastomer has a combination of polymer blocks composed of nylon-6, nylon-6,6, nylon-11, nylon-12, or a mixture thereof with polymer blocks composed of polyethylene glycol, polypropylene glycol, polytetrahydrofuran, or a mixture of these.

5. Laminated material particularly for an airbag, according to any of the preceding claims, **characterized in that** the material of the second layer comprises a polyamide elastomer which has been selected from a combination of polymer blocks composed of nylon-6,6 with polyethylene glycol or polypropylene glycol, or from a combination of polymer blocks composed of nylon-12 with polytetrahydrofuran.

6. Laminated material particularly for an airbag, according to any of the preceding claims, **characterized in that** the material of the first and/or of the second layer comprises at least one flame retardant.

7. Laminated material, particularly for an airbag, according to Claim 6, **characterized in that** the flame retardant has been selected from the group consisting of halogen-containing flame retardants, phosphate esters, aluminium oxide trihydrate, magnesium oxide dihydrate, red phosphorus, zinc borate, ammonium polyphosphate, melamine cyanurate, zinc stannate, and zinc hydroxide stannate.

8. Laminated material particularly for an airbag, according to any of the preceding claims, **characterized in that** the backing layer comprises polyamide filaments or polyester filaments or polyamide yarn or polyester yarn and has preferably been woven or knitted, or takes the form of a nonwoven or net.

9. Process for the production of a laminated material for an airbag, according to any of Claims 1 to 8, comprising the steps of:
- provision of a polymer film encompassing at least two layers,
- bonding, in particular lamination of the polymer film to a backing layer, preferably to a woven or knitted fabric or net, the backing layer preferably comprising polyamide,
where the first layer of the polymer film is composed of a material whose glass transition temperature is below -10°C, and the second layer of the polymer film is composed of a material whose glass transition material is below 20°C.

10. Process according to Claim 9, **characterized in that** the material of the second layer encompasses at least one copolyester, one copolyamide, or one polyamide elastomer, the melting point of the material being above 170°C.

11. Process according to Claim 10, **characterized in that** the copolyester, the copolyamide, or the polyamide elastomer has a combination of polymer blocks composed of nylon-6, nylon-6,6, nylon-11, nylon-12, or a mixture thereof with polymer blocks composed of polyethylene glycol, polypropylene glycol, polytetrahydrofuran, or a mixture of these, in particular a combination of polymer blocks composed of nylon-6,6 with polyethylene glycol or polypropylene glycol, or a combination of polymer blocks composed of nylon-12 with polytetrahydrofuran.

12. Process according to any of Claims 9 to 11, **characterized in that** the material of the first and/or of the second layer comprises a flame retardant as additive.

13. Process according to any of Claims 9 to 12, **characterized in that** the polymer film and/or the layers are produced via extrusion.

14. Process according to Claim 13, **characterized in that** the extruded layers are laminated together to give a polymer film.

15. Airbag, comprising a laminated material according to any of Claims 1 to 8.

16. Passive restraint system, encompassing at least one airbag according to Claim 15.

17. Polyamide polymer film comprising at least two layers, **characterized in that** the glass transition temperature of the first layer is below -10°C and the glass transition temperature of the second layer is below 20°C, and **in that** the second layer encompasses at least one copolyester, one copolyamide, or one polyamide elastomer, the melting point of the material being above 170°C, **characterized in that** the material of the first and/or second layer comprises at least one flame retardant selected from the group consisting of halogen-containing flame retardants, phosphate esters, aluminium oxide trihydrate, magnesium oxide dihydrate, red phosphorus, zinc borate, ammonium polyphosphate, melamine cyanurate, zinc stannate, and zinc hydroxide stannate.

18. Polyamide polymer film according to Claim 17, **characterized in that** the glass transition temperature of the material of the first layer is below -20°C, more preferably below -30°C, and the glass transition temperature of the material of the second layer is below 10°C, particularly preferably below 0°C.

19. Polyamide polymer film according to Claim 17 or 18, **characterized in that** the copolyester, the copolyamide, or the polyamide elastomer has a combination of polymer blocks composed of nylon-6, nylon-6,6, nylon-11, nylon-12, or a mixture of these with polymer blocks composed of polyethylene glycol, polypropylene glycol, polytetrahydrofuran, or a mixture of these.

20. Polyamide polymer film according to any of Claims 17 to 19, **characterized in that** the material of one layer, preferably of the second layer, is a polyamide elastomer selected from a combination of polymer blocks composed of nylon-6,6 with polyethylene glycol or polypropylene glycol, or from a combination of polymer blocks composed of nylon-12 with polytetrahydrofuran.

21. Use of a polyamide polymer film according to any of Claims 17 to 20 for the gas-tight coating of a backing material, in particular of a woven or knitted fabric, of a nonwoven, or of a net or gauze.

## Revendications

1. Matériau composite à couches, en particulier pour un coussin d'air, comprenant un film polymère, de préférence, un film polymère de polyamide, qui est lié à une couche de support, en particulier à un tissu ou à un tissu à mailles, le film polymère présentant au moins une première couche et une deuxième couche, **caractérisé en ce que** la première couche est formée d'un matériau ayant une température de transition vitreuse de moins de -10°C et **en ce que** la deuxième couche est formée d'un matériau ayant une température de transition vitreuse de moins de 20°C.

2. Matériau composite à couches, en particulier pour un coussin d'air, selon la revendication 1, **caractérisé en ce que** le matériau de la première couche présente une température de transition vitreuse de moins de -20°C, en outre, de préférence, de moins de -30°C et **en ce que** le matériau de la deuxième couche présente une température de transition vitreuse de moins de 10°C, en particulier, de préférence, de moins de 0°C .

3. Matériau composite à couches, en particulier pour un coussin d'air, selon la revendication 1 ou 2, **caractérisé en ce que** le matériau de la deuxième couche comprend au moins un copolyester, un copolyamide ou un élastomère de polyamide, le matériau présentant un point de fusion qui se situe à ou au-dessus de 170°C.

4. Matériau composite à couches, en particulier pour un coussin d'air, selon la revendication 3, **caractérisé en ce que** le copolyester, le copolyamide ou l'élastomère de polyamide présente une combinaison de blocs polymères en polyamide-6, en polyamide-6,6, en polyamide-11, en polyamide-12 ou de mélanges de ces derniers avec des blocs polymères en polyéthylèneglycol, en polypropylèneglycol, en polytétrahydrofuranne ou avec des mélanges de ces derniers.

5. Matériau composite à couches, en particulier pour un coussin d'air, selon l'une quelconque des revendications précédentes, **caractérisé en ce que** le matériau de la deuxième couche contient un élastomère de polyamide, qui est sélectionné parmi une combinaison de blocs polymères en polyamide-6,6 avec du polyéthylèneglycol ou du polypropylèneglycol ou parmi une combinaison de blocs polymères en polyamide-12 avec du polytétrahydrofuranne.

6. Matériau composite à couches, en particulier pour un coussin d'air, selon l'une quelconque des revendications précédentes, **caractérisé en ce que** le matériau de la première et/ou de la deuxième couche contient au moins un agent ignifuge.

7. Matériau composite à couches, en particulier pour un coussin d'air, selon la revendication 6, **caractérisé en ce que** l'agent ignifuge est sélectionné parmi le groupe comprenant des agents ignifuges contenant des halogènes, des esters de phosphate, le trihydrate d'oxyde d'aluminium, le dihydrate d'oxyde de magnésium, le phosphore rouge, le borate de zinc, le polyphosphate d'ammonium, le cyanurate de mélamine, le stannate de zinc et l'hydroxy stannate de zinc.

8. Matériau composite à couches, en particulier pour un coussin d'air, selon l'une quelconque des revendications précédentes, **caractérisé en ce que** la couche de support contient des filaments ou des fils de polyamide ou de polyester et est réalisée, de préférence, sous forme de tissu, de tricot, en tant que non tissé ou en tant que réseau.

9. Procédé en vue de la fabrication d'un matériau à couches composite pour coussin d'air selon l'une quelconque des revendications 1 à 8, contenant les étapes :
- de mise à disposition d'un film polymère comprenant au moins deux couches,
- de liaison, en particulier de laminage du film polymère à une couche de support, de préférence, à un tissu, à une maille ou à un réseau, la couche de support contenant, de préférence, un polyamide,et la première couche du film polymère étant formée à partir d'un matériau ayant une température de transition vitreuse de moins de - 10°C et la deuxième couche du film polymère étant formée à partir d'un matériau ayant une température de transition vitreuse de moins de 20°C.

10. Procédé selon la revendication 9, **caractérisé en ce que** le matériau de la deuxième couche comprend au moins un copolyester, un copolyamide ou un élastomère de polyamide, le matériau ayant un point de fusion de plus de 170°C.

11. Procédé selon la revendication 10, **caractérisé en ce que** le copolyester, le copolyamide et l'élastomère de polyamide présente une combinaison de blocs polymères en polyamide-6, en polyamide-6,6, en polyamide-11, en polyamide-12 ou en mélanges de ces derniers avec des blocs polymères en polyéthylèneglycol, polypropylèneglycol, polytétrahydrofuranne ou en mélanges de ces derniers, en particulier une combinaison de blocs polymères en polyamide-6,6 avec du polyéthylèneglycol ou du polypropylèneglycol, ou en une combinaison de blocs polymères en polyamide-12 avec du polytétrahydrofuranne.

12. Procédé selon l'une quelconque des revendications 9 à 11, **caractérisé en ce que** le matériau de la première et/ou de la deuxième couche contient en tant qu'additif un agent ignifuge.

13. Procédé selon l'une quelconque des revendications 9 à 12, **caractérisé en ce que** le film polymère et/ou les couches sont fabriqués par extrusion.

14. Procédé selon la revendication 13, **caractérisé en ce que** les couches extrudées sont laminées ensemble pour former un film polymère.

15. Coussin d'air, contenant un matériau à couches composite selon l'une quelconque des revendications 1 à 8.

16. Système passif d'appui, comprenant au moins un coussin d'air selon la revendication 15.

17. Film polymère en polyamide contenant au moins deux couches, **caractérisé en ce que** la première couche présente une température de transition vitreuse de moins de -10°C et la deuxième couche présente une température de transition vitreuse de moins de 20°C et **en ce que** la deuxième couche comprend au moins un copolyester, un copolyamide ou un élastomère de polyamide, le matériau présentant un point de fusion de plus de 170°C, et **en ce que** le matériau de la première et/ou de la deuxième couche contient au moins un agent ignifuge, qui est sélectionné parmi le groupe comprenant des agents ignifuges contenant des halogènes, des esters de phosphate, le trihydrate de l'oxyde d'aluminium, le dihydrate de l'oxyde de magnésium, le phosphore rouge, le borate de zinc, le polyphosphate d'ammonium, le cyanurate de mélamine, le stannate de zinc et l'hydroxy stannate de zinc.

18. Film polymère en polyamide selon la revendication 17, **caractérisé en ce que** le matériau de la première couche présente une température de transition vitreuse de moins de -20°C, en outre, de préférence, de moins de -30°C et **en ce que** le matériau de la deuxième couche présente une température de transition vitreuse de moins de 10°C, en particulier, de préférence, de moins de 0°C.

19. Film polymère selon la revendication 17 ou 18, **caractérisé en ce que** le copolyester, le copolyamide ou l'élastomère de polyamide présente une combinaison de blocs polymères en polyamide-6, en polyamide-6,6, en polyamide-11, en polyamide-12 ou en mélanges de ces derniers avec des blocs polymères en polyéthylèneglycol, en polypropylèneglycol, en polytétrahydrofuranne ou en mélange des ces derniers.

20. Film polymère en polyamide selon l'une quelconque des revendications 17 à 19, **caractérisé en ce que** le matériau d'une couche, de préférence, de la deuxième couche, est un élastomère de polyamide, sélectionné parmi une combinaison de blocs polymères en polyamide-6,6 avec du polyéthylèneglycol ou du polypropylèneglycol ou parmi une combinaison de blocs polymères en polyamide-12 avec le polytétrahydrofuranne.

21. Utilisation d'un film polymère de polyamide selon l'une quelconque des revendications 17 à 20, en vue du revêtement étanche aux gaz d'un matériau de support, en particulier d'un tissu, d'un tissu à mailles, d'un non-tissé ou d'un réseau ou d'une treillis.
